Europäisches Patentamt

European Patent Office

Office européen des brevets

(11) Publication number: **0 416 112 A1**

# EUROPEAN PATENT APPLICATION
## published in accordance with Art. 158(3) EPC

(21) Application number: 90902385.5

(22) Date of filing: 25.01.90

(86) International application number:
PCT/JP90/00084

(87) International publication number:
WO 90/08620 (09.08.90 90/19)

(51) Int. Cl.⁵: **B23K 26/08, B25J 17/00**

(30) Priority: 30.01.89 JP 17431/89

(43) Date of publication of application:
13.03.91 Bulletin 91/11

(84) Designated Contracting States:
DE FR GB

(71) Applicant: FANUC LTD.
3580, Shibokusa Aza-Komanba, Oshino-mura
Minamitsuru-gun, Yamanashi 401-05(JP)

(72) Inventor: TORII, Nobutoshi
Fuyo Haitsu 308 65-4, Takakura-cho
Hachioji-shi Tokyo 192(JP)
Inventor: ITO, Susumu FANUC Mansion
Harimomi 7-204

3539-1, Shibokusa Oshino-mura
Minamitsuru-gun Yamanashi 401-05(JP)
Inventor: TERADA, Akihiro FANUC Mansion
Harimomi 8-207
3511-1, Shibokusa Oshino-mura
Minamitsuru-gun Yamanashi 401-05(JP)
Inventor: OKADA, Takeshi FANUC Dai-3
Vira-karamatsu
3527-1, Shibokusa Oshino-mura
Minamitsuru-gun Yamanashi 401-05(JP)

(74) Representative: Brunner, Michael John et al
GILL JENNINGS & EVERY 53-64 Chancery
Lane
London WC2A 1HN(GB)

(54) **WRIST FOR AN INDUSTRIAL LASER ROBOT.**

(57) A wrist (26,126,226) for an industrial laser robot, which is provided at the tip of a robot arm (20,120,220) and which has a laser beam emitting portion (28, 128, 228), is equipped with a direct drive-type motor (Mα, Mβ, Mγ) that works at least as a wrist drive source for the robot arm (20,120,220), a hollow drive shaft (30,130,230,24,124,224,240) that is driven by the direct drive motor (Mα,Mβ,Mγ), and a brake (Bα,Bβ,Bγ) which surrounds the hollow drive shaft (30,130,230,24,124,224,240) to come in contact therewith or separate away therefrom. A laser beam tubular path (30,130,230) is arranged in the hollow drive shaft (30,130,230,24,124,224,240) to make the robot arm (20,120,220) communicate with the laser beam emitting portion (28, 128,228), and the laser beam is emitted from the laser beam emitting portion (28,128,228).

EP 0 416 112 A1

# Fig. 4

## TITLE OF THE INVENTION

Robot Wrist Assembly for an Industrial Laser Robot

TECHNICAL FIELD

The present invention relates to the construction of a robot wrist assembly for an industrial laser robot and, more particularly, to a robot wrist assembly for an industrial laser robot, having a compact construction and provided with a direct-drive motor or motors for driving the mechanism thereof.

BACKGROUND ART

The industrial laser robot widely used for laser-beam machining utilizing laser energy, such as laser-beam welding, laser-beam cutting and laser beam seaming, is a multi-articulated industrial laser robot provided with, as principal components, a robot body, a first robot am, i.e., an upper arm, articulated to the robot body for a swinging motion about a horizontal axis (W-axis), and second robot arm, i.e., a forearm, articulated to the front end of the first robot arm for a swinging motion about a horizontal axis (U-axis). A robot wrist assembly of a conventional structure for such a multi-articulated industrial laser robot is provided with a plurality of wrist drive motors, the number of motors being equal to the degree of freedom of motion of the robot wrist assembly, in the extremity of the second robot arm. The output speed of each wrist drive motor is reduced by a well-known RV reduction gear (Teijin Seiki K.K., in Japan), and the reduced speed output rotation is transmitted to each wrist drive shaft. The rotation of the wrist drive shaft or shafts, directly or after a directional conversion by a transmission mechanism such as a bevel gear mechanism, give motions of one to three degrees of freedom to the robot wrist assembly. A laser beam emitted by a laser beam generating unit separated from the robot unit is transmitted to the robot unit by laser beam transmitting piping. Since the laser beam can not be transmitted through the robot arms, because the laser beam cannot be transmitted through the central portion of the RV reduction gear, the laser beam is transmitted along a path formed through a conduit extended externally of the robot unit, is reflected by a mirror disposed near the extremity of the robot wrist assembly toward a laser beam emitting nozzle, and is focused by a focusing lens to intensify the energy of the laser beam for laser machining.

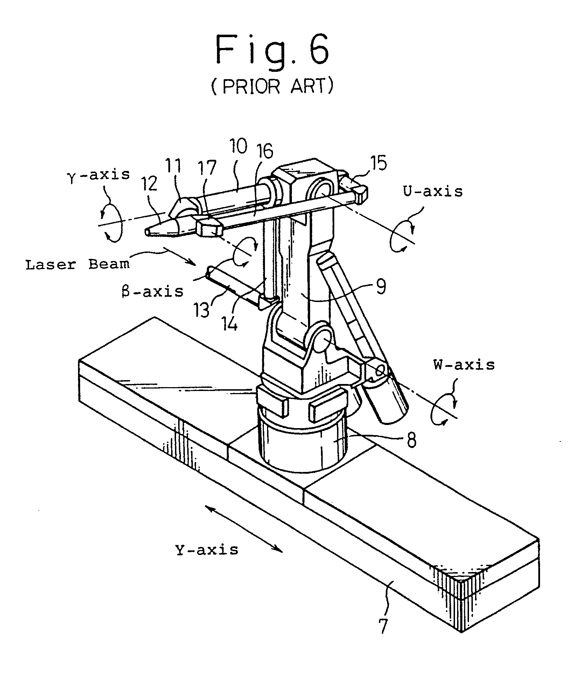

Figure 6 shows a typical conventional multi-articulated industrial laser robot. This multi-articulated industrial laser robot is provided with a robot base 7 movable along the floor surface along a lateral axis (Y-axis), a robot body 8 swivably mounted on the robot base 7, a first robot arm 9 articulated to the upper end of the robot body 8 for a swinging motion about a horizontal axis (W-axis), a second robot arm 10 articulated to the extremity of the first robot arm 9 for a swinging motion about a U-axis parallel to the W-axis, and a robot wrist assembly 11 having a laser beam emitting nozzle 12 and mounted on the extremity of the second robot arm 10. A laser beam emitted by a laser beam generating unit, not shown, is transmitted through a suitable piping near to the robot unit, and then transmitted through pipes 13 and 14 to the rear end of the second robot arm 10, further transmitted through a pipe 15 and a pipe l6 extended along the second robot arm 10 to a mirror unit 17, and reflected by the mirror unit 17 toward the laser emitting nozzle 12. The robot unit 11 is capable of carrying out motions of, for example, two degrees of freedom; namely, rotary motions about a $\beta$-axis and a $\gamma$-axis, respectively. Since the transmission mechanism of two degrees of freedom of motion of the robot unit 11 includes the previously mentioned RV reduction gear, not shown, having a rotary input or output shaft in the central portion thereof, it is impossible to extend the pipes 14 to 16 through the central portion of the reduction gear and, consequently, it is difficult to form paths for the laser beam within the robot arms and the robot wrist assembly. In particular, a laser robot using a high laser energy, for example, a laser energy of several kilowatts, unavoidably requires pipes having a diameter as large as several tens of millimeters. Therefore, it is difficult to design and manufacture a laser robot having laser beam transmission pipes arranged within the robot unit when such a robot wrist assembly having a transmission mechanism including a conventional RV reduction gear is employed. The externally arranged laser beam transmission pipes cause problems such as an interference with peripheral equipment, and restrict the range of the swiveling motion of the robot body. Mounting a reduction gear on the extremity of the robot wrist assembly increases the weight and inertial mass of the robot wrist assembly, making precision positioning and motions at a high acceleration and deceleration difficult, and thus is disadvantageous to the use of the robot wrist assembly. Furthermore, because it has a large and

3

heavy gear box including a helical gear mechanism for receiving the output of a motor, and a reduction gear mechanism for reducing a high input speed to a lower output speed, the RV reduction gear makes a rapid motion of the robot wrist assembly difficult and backlash between the teeth of the component gears lowers the machining accuracy.

## DISCLOSURE OF THE INVENTION

Accordingly, an object of the present invention is to solve the problems of the construction of the conventional robot wrist assembly generally used as a robot wrist assembly for a multi-articulated industrial laser robot.

Another object of the present invention is to provide a robot wrist assembly for an industrial laser robot, employing a well-known direct-drive motor as a rotative drive source for rotatively driving the wrist assembly to enable an arrangement of laser beam transmission pipes within the robot unit, to eliminate the possibility of interference between the robot unit and the peripheral equipment, and to enable the robot unit to be formed in a compact construction.

In accordance with one aspect of the present invention, there is provided a robot wrist assembly suitable for mounting on the extremity of the robot arm means of an industrial laser robot and provided with a laser beam emitting means, which comprises:

A direct-drive motor means provided on the robot arm means to give a motion of at least one degree of freedom to the robot wrist assembly;

a hollow wrist drive shaft means driven by the direct-drive motor means;

a braking means capable of being engaged with and disengaged from a circumference of the hollow wrist driving shaft means, for a braking action; and

a laser beam transmitting pipe means arrange within the hollow wrist drive shaft means for providing a communication between the robot arm means and the laser beam emitting means.

The robot wrist assembly having such a construction enables a laser beam emitted by the laser beam generating unit, and usually transmitted through an external piping to the robot arm means of the robot unit of the industrial laser robot, to be transmitted through the robot arm means and the hollow wrist drive shaft means of the robot wrist assembly to the laser beam emitting means. Since the laser beam transmitting pipe means is arranged within the robot unit, and within the hollow wrist drive shaft means having a high rigidity and a high strength, the laser beam transmitting pipe means may comprise pipes having a comparatively large diameter for transmitting laser energy. Further, the elimination of the external laser beam transmitting pipes from the vicinity of the robot wrist assembly enables the robot wrist assembly to be formed in a compact construction.

## BRIEF DESCRIPTION OF THE DRAWINGS

The above and other objects, features and advantages of the present invention will be described in more detail with reference to the accompanying drawings, in which:

Fig. 1 is a sectional view of a robot wrist assembly for an industrial laser robot, according to a first embodiment of the present invention;

Fig. 2 is a sectional view of a robot wrist assembly for an industrial laser robot, according to a second embodiment of the present invention;

Fig. 3 is a sectional view of a modification of the robot wrist assembly shown in Fig. 2;

Fig. 4 is a sectional view of a robot wrist assembly according to a third embodiment of the present invention;

Fig. 5 is a sectional view of a modification of the robot wrist assembly of Fig. 4; and

Fig. 6 is a perspective view illustrating the construction of a conventional multi-articulated industrial laser robot.

## BEST MODE OF CARRYING OUT THE INVENTION

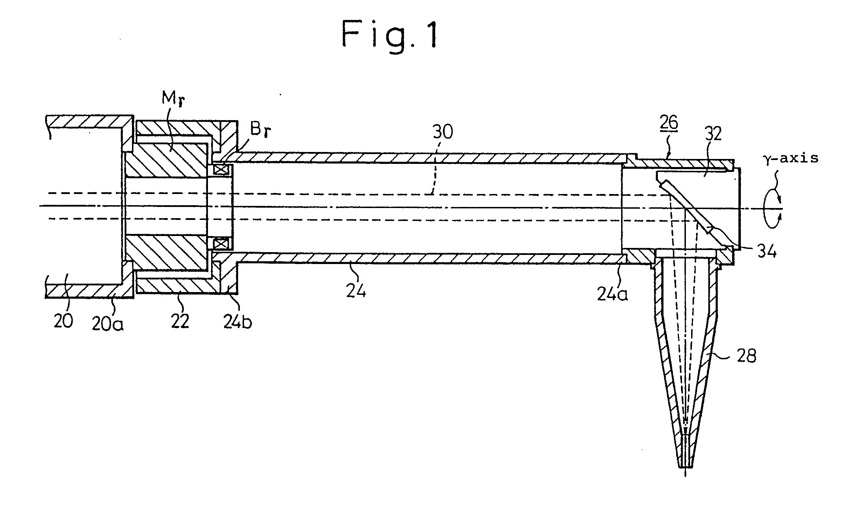

Referring to Fig. 1, which illustrated a robot wrist assembly having a one degree of freedom of motion for an industrial laser robot, according to a first embodiment of the present invention, a direct-drive motor $M_Y$ having a generally known hollow construction is disposed at the extremity of the casing 20a of a robot arm 20, i.e., a robot forearm, capable of turning about a U-axis. The rear end 24b of a hollow wrist drive shaft 24 is joined to a rotative component 22 of the direct-drive motor $M\gamma$ by an appropriate joint mechanism, such as a bolt joint; an electromagnetic brake $B\gamma$ is juxtaposed to the direct-drive motor $M\gamma$, to apply a braking force to the inner circumference of the wrist drive shaft 24; a robot wrist assembly 26 is coaxially joined to the front end 24a of the wrist drive shaft 24 for rotation together with the wrist drive shaft 24 about the axis of the wrist drive shaft 24 ($\gamma$-axis); and a laser beam emitting nozzle 28 is accommodated in the robot wrist assembly 26. This construction enables the extension of a laser beam transmission pipe 30 substantially through a central portion of the robot arm 20, the direct-drive motor $M\gamma$, the brake $B\gamma$ and the wrist drive shaft 24, from the rear end of the robot arm 20 to the robot wrist assembly 26. The direction of travel of a laser beam transmitted through the laser beam transmission pipe 30 from the rear end of the robot arm 20 into the robot wrist assembly 26 is changed, for example, substantially through an angle of 90° by a mirror unit 32 having a converging concave mirror 34, and the laser beam is directed through the laser beam emitting nozzle 28 toward a desired point for laser machining.

Since the laser beam transmission pipe 30 is extended through the components of the robot unit including the robot arm 20, the robot wrist drive shaft 24 and the robot wrist assemble 26, the interference between the laser beam transmission pipe 30 and the peripheral equipments can be avoided, and the laser beam transmission pipe 30 may have a comparatively large diameter, so that the laser beam transmission pipe 30 is capable of transmitting a laser beam having a high energy. Since the direct-drive motor $M\gamma$ is employed for driving the robot wrist assembly 26, and the power transmission system for transmitting the output power of the direct-drive motor $M\gamma$ to the robot wrist assembly 26, particularly, a portion of the power transmission system in the robot wrist assembly 26, is not provided with a reduction gear, a significant reduction in the weight of the robot wrist assembly 26 can be obtained. Further, since the robot wrist assembly 26 needs only the mirror unit 32, the robot wrist assembly 26 can be formed in a lightweight, very compact construction. This reduction of the inertial mass of the robot wrist assembly including the wrist drive shaft 24, the robot wrist assembly 26 and the nozzle 28 improves the accuracy of the operation of the wrist assembly.

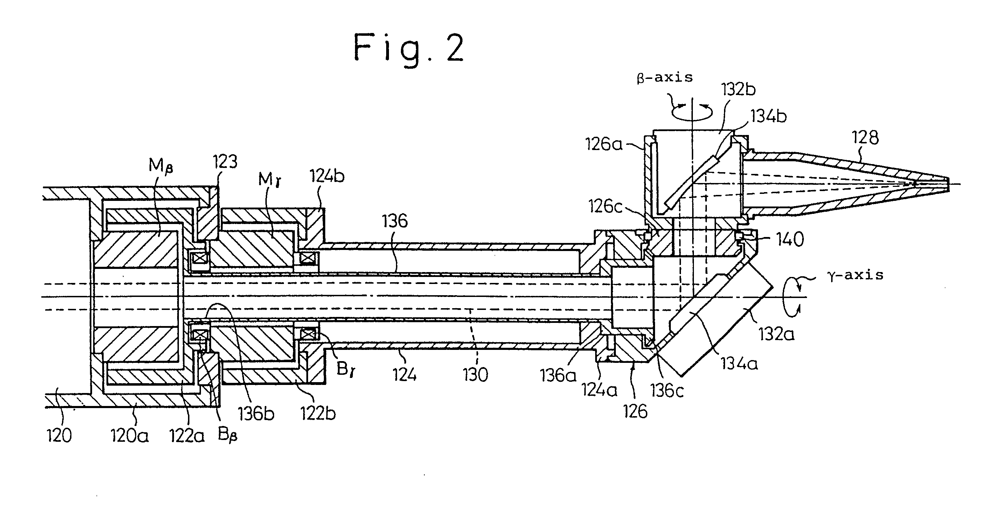

Figure 2 illustrates a robot wrist assembly according to a second embodiment of the present invention, applied to an industrial laser robot and having two degrees of freedom of motion. A direct-drive motor $M\beta$ having a hollow construction is provided in the extremity of the front casing 120a of a robot arm 120, i.e., a forearm, capable of turning about a U-axis, and a first hollow wrist drive shaft 136 of a $\beta$-axis system is directly joined to the rotative component 122a of the direct-drive motor $M\beta$. An electromagnetic brake $B\beta$ is disposed so as to be engaged with and disengaged from the circumference of the rear end 136b of the hollow wrist drive shaft 136 for braking action, the front end 136a of the first hollow wrist drive shaft 136 is received in a robot wrist assembly 126, and a bevel gear 136c is attached to the extremity of the hollow wrist drive shaft 136 is engaged with a bevel gear 126c attached to the base end of the robot wrist assembly 126 to turn the robot wrist assembly 126 about the $\beta$-axis. The front end of the front casing 120a is closed by an end cap 123.

Another direct-drive motor $M\gamma$ have a hollow construction is contiguously disposed with the end cap 123 closing the front end of the front casing 120a of the robot arm 120, and the rotative component 122b of the direct-drive motor $M\gamma$ is joined to the rear end 124b of a second wrist drive shaft 124. The first wrist drive shaft 136 is extended coaxially with and through the second wrist drive shaft 124, the front end 124a of the second wrist drive shaft 124 is joined to the robot wrist assembly 126 to turn the robot wrist assembly 126 about a $\gamma$-axis (a second degree of freedom of motion), and an electromagnetic brake $B\gamma$ is associated with the rear end 124b of the second wrist drive shaft 124 to apply a brake to the second wrist drive shaft 124.

Since the wrist drive shafts 124 and 136 have a hollow construction, the interior of the first wrist drive shaft 136 extending through the second wrist drive shaft 124 can be utilized for passing a laser beam transmitted through the robot arm 120. Accordingly, a laser beam transmission pipe 130 is extended through the robot arm 120, the respective central portions of the two direct-drive motors $M\beta$ and $M\gamma$, and the respective central portions of the two electromagnetic brakes $B\beta$ and $B\gamma$, to the robot wrist assembly 126. The direction of travel of a laser beam transmitted through the laser beam transmission pipe 130 is changed substantially through an angle of 90° by the mirror 134a of a first mirror unit 132a, and is again changed substantially through an angle of 90° by the converging concave mirror 134b of a second mirror unit 132b disposed within a casing 126a supported for turning about the $\beta$-axis by a bearing 140 on the upper end of the robot wrist head 126, and thus the laser beam is emitted through the laser beam emitting nozzle 128 to a desired position.

Since the laser beam transmission pipe 130 is extended through the robot arm 120 to the interior of the robot wrist head 126, and the laser beam transmitted through the laser beam transmission pipe 130 is

5

reflected by the internal mirror units 132a and 132b toward the laser beam emitting nozzle 128, an external laser beam transmission pipe is not necessary, interference of the laser beam transmission pipe with the peripheral equipments is avoided, restrictions on the operating range of the robot wrist head 126 are eliminated, and of course, the robot wrist assembly can be formed in a compact construction.

Since the robot wrist head 126 joined to the extremities of the wrist drive shafts 124 and 136 is not provided with a reduction gear, the robot wrist assembly can be formed in a lightweight construction, and thus the robot wrist assembly can be operated at a high operating speed with a high accuracy.

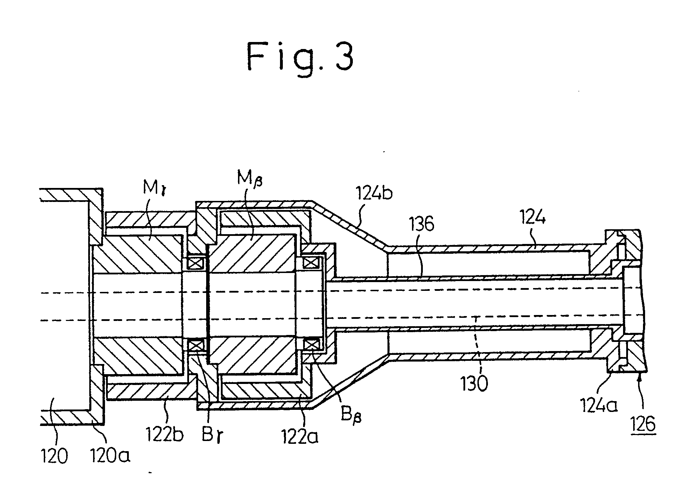

Figure 3 illustrates a modification of the robot wrist assembly for an industrial laser robot shown in Fig. 2. In this modification, the robot wrist head 126 has two degrees of freedom of motion (turning motions about the $\beta$-axis and the $\gamma$-axis), and the two mirror units, not shown, and the laser beam emitting nozzle attached to the extremity of the robot wrist head 126 are exactly the same as those illustrated in Fig. 2.

The positional relationship between the direct-drive motors M$\beta$ and M$\gamma$ and the positional relationship between the brakes B$\beta$ and B$\gamma$ in this modification are inverse to those of the second embodiment shown in Fig. 2.

The laser beam transmission pipe 130 is extended axially through the robot arm 120, the two direct-drive motors M$\beta$ and M$\gamma$, the brakes B$\beta$ and B$\gamma$, and the inner wrist drive shaft 136, to the robot wrist head 126, and thus the robot wrist assembly in this modification has the same advantages as those of the robot wrist assembly in the second embodiment, including the internal laser beam path.

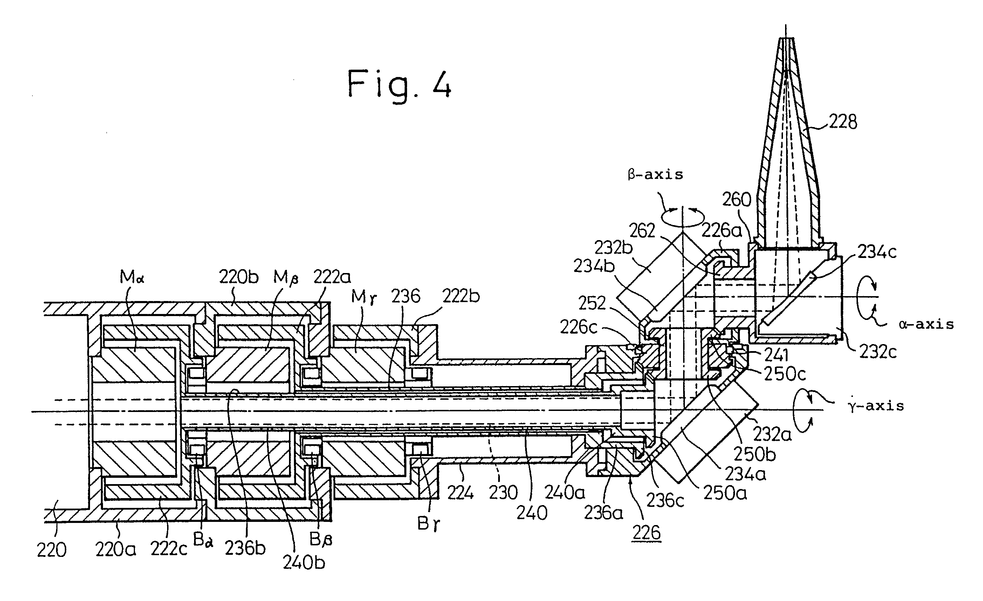

Figure 4 illustrates a robot wrist assembly according to a third embodiment of the present invention. An industrial laser robot is equipped with a robot wrist assembly having three degrees of freedom of motion (turning motions about three axes, i.e., an $\alpha$-axis, a $\beta$-axis, and a $\gamma$-axis), and provided with direct-drive motors for driving the assembly per se. A laser beam transmission pipe is extended through the robot arm of the industrial laser robot and the robot wrist assembly.

Referring to Fig. 4, a first direct-drive motor M$\alpha$ is provided at the front end of the casing 220a of a robot arm 220, and the rotative component 222c of the direct-drive motor M$\alpha$ is directly joined to the rear end 240b of a hollow wrist drive shaft 240, to transmit the output rotation of the direct-drive motor M$\alpha$, i.e., the rotation of the rotative component 222c of the direct-drive motor M$\alpha$, directly to the wrist drive shaft 240. A brake B$\alpha$ is disposed so as to be engaged with and disengaged from the circumference of the rear end 240b of the wrist drive shaft 240, to apply a braking force to the wrist drive shaft 240.

An intermediate casing 220b is contiguously disposed with the extremity of the front casing 220a of the robot arm 220, and a second direct-drive motor M$\beta$ having a rotative component 222a is contained in the intermediate casing 220b. The rotative component 222a of the direct-drive motor M$\beta$ is directly joined to the rear end 236b of a hollow wrist drive shaft 236 extended coaxially with and outside the wrist drive shaft 240, to drive the wrist drive shaft 236 for rotation, and a brake B$\beta$ can be disengageably engaged with the outer circumference of the rear end 236b of the wrist drive shaft 236, to brake the wrist drive shaft 236.

A third direct-drive motor M$\gamma$ is provided contiguously with and in front of the combination of the direct-drive motor M$\beta$ and the brake B$\beta$, and the rotative component 222b of the direct-drive motor M$\gamma$ is joined to an outermost hollow wrist drive shaft 224 coaxially extended with and outside the wrist drive shafts 236 and 240, to drive the wrist drive shaft 224 for rotation. A brake B$\gamma$ is engageable with the inner circumference of the wrist drive shaft 224, to apply a brake to the wrist drive shaft 224.

The wrist drive shafts 224, 236 and 240 are extended to be connected to a robot wrist assembly 226. The wrist drive shaft 224 drives the robot wrist assembly 226 for rotation about a $\gamma$-axis, and the rotation of the wrist drive shaft 236 is transmitted through a bevel gear 236c attached to the extremity 236a of the wrist drive shaft 236 and a bevel gear 226c attached to an intermediate wrist casing 226a and supported in a bearing 241, to drive the intermediate wrist casing 226a for rotation about a $\beta$-axis.

A bevel gear 250a attached to the extremity 240a of the wrist drive shaft 240 is engaged with a bevel gear 250b attached to one end of a sleeve 252 journaled within the intermediate wrist casing 226a, to drive the sleeve 252 for rotation, and a bevel gear 250c attached to the other end of the sleeve 252 is engaged with a bevel 262 provided on the rear end of a hollow nozzle holding member 260 holding a laser beam emitting nozzle 228. Accordingly, the rotation of the wrist drive shaft 240 is transmitted to the nozzle holding member 260, to thereby permit the nozzle holding member 260 to turn about an $\alpha$-axis (a third degree of freedom of motion). Eventually, the laser beam emitting nozzle 228 held by the nozzle holding member 260 has three degrees of freedom of motion for rotation about the $\alpha$-axis, the $\beta$-axis, and the $\gamma$-axis.

In the industrial laser robot employing the robot wrist assembly having three degrees of freedom of motion, a laser beam transmission pipe 230 is extended through the innermost wrist drive shaft 240 to transmit a laser beam transmitted through the robot arm 220 to a robot wrist assembly 226. The laser beam transmitted to the robot wrist assembly 226 is directed toward the central portion of the hollow sleeve 252 by the mirror 234a of a first mirror unit 232a, further directed toward the central portion of the hollow nozzle holding member 260 by the mirror 234b of a second mirror unit 232b, and further directed toward the laser beam emitting nozzle 228 by the converging concave mirror 234c of a third mirror unit 232c. The converging concave mirror 234c converges the laser beam and changes the direction of travel of the laser beam, and the laser beam is then emitted through the laser beam emitting nozzle 228.

Namely, the laser beam is transmitted through the robot arm 220 of the robot unit, the three direct-drive motors $M\alpha$, $M\beta$, and $M\gamma$, the brakes $B\alpha$, $B\beta$ and $B\gamma$, the robot wrist assembly 226, the intermediate casing 226a and the nozzle holding member 260, and is emitted through the laser beam emitting nozzle 228. Since it is provided with the three direct-drive motors, and not provided with a reduction gear and associated mechanisms, the robot wrist assembly having three degrees of freedom of motion is comparatively lightweight and is able to operate rapidly with high accuracy.

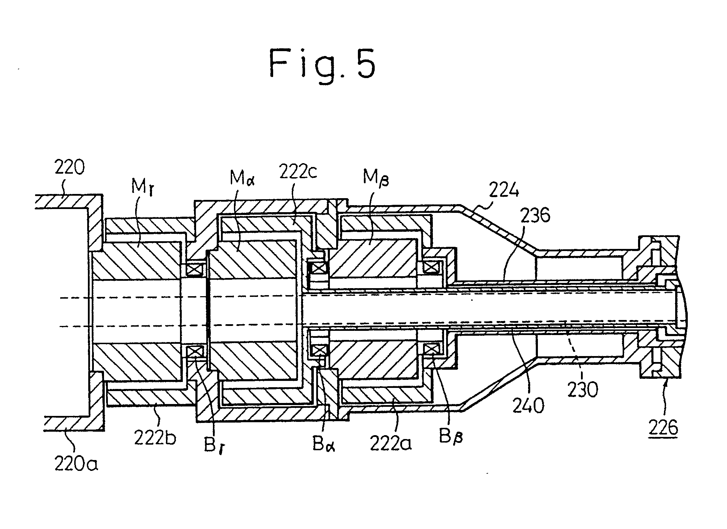

Figure 5 illustrates a modification of the robot wrist assembly having three degrees of freedom of motion shown in Fig. 4, for an industrial laser robot. The modified robot wrist assembly is different from that shown in Fig. 4, like the difference of the robot wrist assembly shown in Fig. 3 from that shown in Fig. 2, only in the order of arrangement of the direct-drive motors $M\alpha$, $M\beta$, and $M\gamma$, and in the order of arrangement of the brakes $B\alpha$, $B\beta$ and $B\gamma$, and thus a detailed description thereof will be omitted. The laser beam transmission pipe 230 in this modification, similar to the laser beam transmission pipe of the robot wrist assembly show in Fig. 4, is extended through the innermost wrist drive shaft 240 to form paths for the laser beam internally of the robot unit.

As is apparent from the foregoing description of the preferred embodiments of the present invention, a robot wrist assembly provided with a laser beam emitting nozzle in accordance with the present invention for an industrial laser robot is provided internally with a laser beam transmission pipe extended along the extension of a laser beam path formed through the robot arm of the industrial laser robot, to arrange all of the laser beam transmission pipes within the robot unit, and no laser beam transmission pipe is arranged around the robot wrist assembly. Accordingly, the robot wrist assembly has a compact construction, the possibility of interference of the robot unit with the peripheral equipment is reduced, and the operating function of the industrial laser robot is improved.

Since the robot wrist assembly employs a direct-drive motor or motors having a hollow construction, to enable the laser beam transmission pipe to be extended within the robot wrist assembly, the robot wrist assembly need not be provided with a reduction gear. Therefore, the robot wrist assembly is lightweight and the adverse influence of inertia on the operation of the robot wrist assembly is reduced, and accordingly, the robot wrist assembly is able to operate rapidly and with a high accuracy.

Furthermore, the transmission of the laser beam through the interior of the robot wrist assembly enhances the safety of the industrial laser robot using a high energy laser beam.

Naturally, the constitution, functions and effects of the present invention can be realized in either vertical industrial laser robots or horizontal industrial laser robots.

## LIST OF REFERENCE CHARACTERS

| 7    | Robot base                      |
|------|---------------------------------|
| 8    | Robot body                      |
| 9    | First robot arm                 |
| 10   | Second robot arm                |
| 11   | Robot wrist assembly            |
| 12   | Laser beam emitting nozzle      |
| 13   | Pipe                            |
| 14   | Pipe                            |
| 15   | Pipe                            |
| 16   | Pipe                            |
| 17   | Mirror unit                     |
| 20   | Robot arm                       |
| 20a  | Robot casing                    |
| 22   | Rotative component              |
| 24   | Wrist driving shaft             |
| 24a  | Front end                       |
| 24b  | Rear end                        |
| 26   | Robot wrist assembly            |
| 28   | Laser beam emitting nozzle      |
| 30   | Laser beam transmission pipe    |
| 32   | Mirror unit                     |
| 34   | Concave mirror                  |
| 120  | Robot arm                       |
| 120a | Front casing                    |
| 122a | Rotative component              |
| 122b | Rotative component              |
| 123  | End cap                         |
| 124  | Wrist driving shaft             |
| 124a | Front end                       |
| 124b | Rear end                        |
| 126  | Robot wrist assembly            |
| 126a | Casing rotative about a $\beta$-axis |

| | |
|------|------|
| 126c | Bevel gear |
| 128 | Laser beam emitting nozzle |
| 130 | Laser beam transmission pipe |
| 132a | First mirror unit |
| 132b | Second mirror unit |
| 134a | Mirror |
| 134b | Converging concave mirror |
| 136 | Wrist driving shaft |
| 136a | Front end |
| 136b | Rear end |
| 136c | Bevel gear |
| 140 | Bearing |
| 220 | Robot arm |
| 220a | Front casing |
| 220b | Intermediate casing |
| 222a | Rotative component |
| 222b | Rotative component |
| 222c | Rotative component |
| 224 | Wrist drive shaft |
| 226 | Robot wrist |
| 226a | Wrist intermediate casing |
| 226c | Bevel gear |
| 228 | Laser beam emitting nozzle |
| 230 | Laser beam pipe |
| 232a | First mirror unit |
| 232b | Second mirror unit |
| 232c | Third mirror unit |
| 234a | Mirror |
| 234b | Mirror |
| 234c | Mirror |
| 236 | Wrist drive shaft |
| 236a | Extremity |
| 236b | Rear end |
| 236c | Bevel gear |

EP 0 416 112 A1

| 240 | Wrist drive shaft |
|---|---|
| 240a | Extremity |
| 240b | Rear end |
| 241 | Bearing |
| 250a | Bevel gear |
| 250b | Bevel gear |
| 250c | Bevel gear |
| 252 | Hollow sleeve |
| 260 | Holding member |
| Mα, Mβ, Mγ | Direct-drive motor |
| Bα, Bβ, Bγ | Brake |

**Claims**

1. A robot wrist assembly equipped with laser beam emitting means, and able to be attached to an extremity of a robot arm means of an industrial laser robot, characterized by comprising:

   direct-drive motor means having stationary element means fixedly connected to said robot arm means and functioning as drive means for driving said robot wrist assembly for a motion of at least one degree of freedom;

   hollow wrist drive shaft means driven by said direct-drive motor means;

   brake means capable of being engaged with and disengaged from a circumference of said hollow wrist drive shaft means for braking; and

   laser beam transmission pipe means provided within said hollow wrist drive shaft means to thereby transmit a laser beam through said robot arm means to said laser beam emitting means.

2. A robot wrist assembly for an industrial laser robot according to claim 1, wherein said direct-drive motor means is mounted on said robot arm means, and comprises a first direct-drive motor and a second direct-drive motor;

   wherein said brake means comprises a first brake in association with said first direct-drive motor, and a second brake in association with said second direct-drive motor, a group of said first direct-drive motor and said first brake, and a group of said second direct-drive motor and said second brake being disposed contiguously with each other;

   wherein said hollow wrist drive shaft means comprises coaxial first and second hollow wrist drive shafts extended one through the other to drive said robot wrist assembly for motion of two degrees of freedom; and

   wherein said laser beam transmission pipe means is provided within the inner one of said coaxial first and second hollow wrist drive shafts.

3. A robot wrist assembly for an industrial laser robot according to claim 2, wherein said robot wrist assembly is provided with one set of bevel gears connected to the inner one of the first and second hollow wrist drive shafts.

4. A robot wrist assembly for an industrial laser robot according to claim 2, wherein said direct-drive motor means and said brake means further comprise a third direct-drive motor and a third brake, respectively, a group of said third direct-drive motor and said third brake being disposed contiguously with said group of said second direct-drive motor and said second brake;

   wherein said hollow wrist drive shaft means comprises a third hollow wrist drive shaft coaxial with said first and second hollow wrist drive shaft to drive said robot wrist assembly for a motion of three degrees of freedom; and

wherein said laser beam transmission means is provided in the interior of said innermost one of said first, second and third hollow wrist drive shafts.

5. A robot wrist assembly for an industrial laser robot according to claim 4, wherein said robot wrist assembly is provided with a further bevel gear mechanism connected to said third hollow wrist drive shaft.

6. A robot wrist assembly for an industrial laser robot according to claim 1, wherein said robot wrist assembly is provided with at least one mirror unit disposed between said laser beam transmission pipe means and said laser beam emitting means, to change the direction of travel of the laser beam.

7. A robot wrist assembly for an industrial laser robot according to claim 6, wherein said laser beam emitting means comprises a laser beam emitting nozzle attached to an extremity of said robot wrist assembly.

8. An articulated industrial laser robot equipped with a robot wrist assembly according to claim 1.

# Fig.1

EP 0 416 112 A1

# Fig. 2

# Fig. 3

# Fig. 4

EP 0 416 112 A1

# Fig.5

# Fig. 6
## (PRIOR ART)

# INTERNATIONAL SEARCH REPORT

International Application No  PCT/JP90/00084

## I. CLASSIFICATION OF SUBJECT MATTER (if several classification symbols apply, indicate all) 6

According to International Patent Classification (IPC) or to both National Classification and IPC

Int. Cl$^5$    B23K26/08, B25J17/00

## II. FIELDS SEARCHED

### Minimum Documentation Searched 7

| Classification System | Classification Symbols |
|---|---|
| IPC | B23K26/00 - 26/18, B25J17/00 |

### Documentation Searched other than Minimum Documentation to the Extent that such Documents are Included in the Fields Searched 8

| | |
|---|---|
| Jitsuyo Shinan Koho | 1926 - 1989 |
| Kokai Jitsuyo Shinan Koho | 1971 - 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, U, 61-27589 (Shibuya Kogyo Kabushiki Kaisha), 19 February 1986 (19. 02. 86), Page 10, line 19 to page 11, line 12, Fig. 3 (Family: none) | 1 - 8 |
| Y | JP, A, 60-146687 (Mitsubishi Electric Corporation), 2 August 1985 (02. 08. 85), Column 11, line 13 to column 12, line 13 (Family: none) | 1 - 8 |
| Y | JP, U, 62-199284 (Komatsu Ltd.), 18 December 1987 (18. 12. 87), (Family: none) | 2 - 8 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| February 28, 1990 (28. 02. 90) | March 5, 1990 (05. 03. 90) |

| International Searching Authority | Signature of Authorized Officer |
|---|---|
| Japanese Patent Office | |

Form PCT/ISA/210 (second sheet) (January 1985)